(19) Europäisches Patentamt
European Patent Office
Office européen des brevets

(11) **EP 4 764 421 A1**

(12) **EUROPEAN PATENT APPLICATION**

(43) Date of publication:
**24.06.2026 Bulletin 2026/26**

(21) Application number: **24221986.3**

(22) Date of filing: **20.12.2024**

(51) International Patent Classification (IPC):
**G01D 5/244** (2006.01)    **G01D 18/00** (2006.01)

(52) Cooperative Patent Classification (CPC):
**G01D 5/2449; G01D 18/001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **maxon international ag**
**6072 Sachseln (CH)**

(72) Inventors:
• **KONG, Weisheng**
**6060 Sarnen (CH)**
• **PERCACCI, Federico**
**8053 Zürich (CH)**

(74) Representative: **Schenk, Markus**
**Schoppe, Zimmermann, Stöckeler Zinkler, Schenk & Partner mbB Patentanwälte**
**Radlkoferstrasse 2**
**81373 München (DE)**

(54) **CONCEPT FOR ROTATION MEASUREMENT OF A ROTOR OF AN ELECTRIC MOTOR**

(57)    A rotation measurement of a rotor (12) of an electric motor (10) is achieved by an apparatus (50) comprising magnetic field sensors (301..3) statically arranged in proximity to the rotor for measuring magnetic fields generated by magnetic poles (20) of the rotor so that sensor signals of the magnetic field sensors change at borders (36) between sectors (32) into which a full revolution of the rotor is partitioned.

The apparatus configured to

- receive a sequence (38) of time durations between consecutive changes of the magnetic field sensors' output signals,

- determine a current average revolution time duration of the rotor based on a sum of M recent time durations of the sequence of time durations, wherein M≥N and N is the number of sectors,

- store, for each sector, a stored length value (62) which indicates the length of the respective sector or a deviation of the length of the respective sector from an ideal sector length, and update, based on the current average revolution time duration of the rotor and a current time duration of the sequence of time durations, the stored length value for a current sector to which the current time duration relates, and

- use the stored length values of the sectors for performing a measurement of a rotation of the rotor.

Fig. 2

**Description**

The present application relates to measurements of a rotation of a rotor of an electric motor including a calibration.

In order to determine the relative rotation between rotor and stator, magnetic field sensors, such as digital Hall sensors, are used. The static arrangement of the Hall sensors around the rotor and the partitioning of the rotor into poles provides a sectioning of the full rotation interval of the rotor into sections within which the Hall sensor outputs remain constant and between which the Hall sensor outputs switch in so-called Hall sensor events. Ideally, Hall sensor events should be evenly distributed over one mechanical revolution, but due to the tolerance of the placement of the Hall sensors and the tolerance in the poles or magnets of the rotor, rotation measurements based on the Hall sensor outputs suffer from a systematic error which may be called Hall placement error. The Hall placement error results in a systematic error of the velocity measurement and commutation of the electric motor which, in turn, may result in higher acoustic noise, vibration and losses. The negative effects are most severe in multi-pole-pair motors.

The systematic Hall sensor error is periodical at every rotor mechanical revolution, but in case of multi-pole-pair motors, for instance, more than one electrical revolution is contained within one mechanical revolution. Thus, while offline calibration is possible, for multi-pole-pair motors, offline calibration would necessitate the existence of an incremental encoder with an indexed channel or an absolute encoder.

The object of the present invention is to provide a concept for rotation measurement of a rotor of an electric motor which results into calibrated rotation measurement at less efforts or less complexity.

This object is achieved by the subject-matter of the independent claims.

The idea underlying the present application is that a rotation measurement of a rotor of an electric motor may be achieved in a more efficient manner by no longer adhering to an offline calibration concept which comes along with additional problems to cope with in case of using, for instance, multi-pole-pair motors. Rather, rotation measurement of a rotor of an electric motor using magnetic field sensors statically arranged in proximity to the rotor, such as on the stator, for measuring magnetic field generated by magnetic poles of the rotor, which might be ones of the motor magnet(s), interacting with the stator field, or ones of extra target magnet(s) such as a target magnetic ring axially offset from the stator magnetic field, so that sensor signals of the magnetic field sensors change at borders between sectors into which a full rotation of the rotor is partitioned may be achieved in a manner which lends itself for an online calibration by making use of a sequence of time durations between consecutive changes of the magnetic field sensors' output signals: a current average revolution time duration of the rotor may be determined based on a sum of M recent time durations of the sequence of time durations, wherein $M \geq N$ and N is the number of sectors; this current average revolution time duration enables to update stored length values, one for each sector and indicating the length of the respective sector or a deviation of the length of the respective sector from the ideal sector length of the sectors, such as defined by a state where all sectors are of equal length or of a mean length of the sectors. Based on the current average revolution time duration and a current time duration of the sequence of time durations, a stored length value for a current sector to which the current time duration relates, is updated. Since the current average revolution time duration already emerges from an accumulation of several time durations covering, at least, or, according to an embodiment exactly, one mechanical full revolution of the rotor, same is relatively stable against measurement inaccuracies and is less or even not affected by any periodical systematic error repeating itself every mechanical revolution and may be used to update the stored length value for the corresponding sector at the borders of which the sensor signals of the magnetic field sensors changed at a temporal distance corresponding to the current time duration. The stored length values of the sectors may, thus, be used for performing a measurement of a rotation of the rotor, e.g., for calibration of the measurement of rotation. For instance, the stored length values may be used to determine a current velocity or speed of the rotor based on the sequence of time durations, namely by using the ratio between a time duration and a length of the sector corresponding to that time duration, determined by use of the corresponding stored and updated length value.

In accordance with an embodiment, the current average revolution time duration of the motor is determined based on a sum of the M most recent immediately consecutive time durations of the sequence of time durations, with M being an integer multiple of N with the integer being greater than or equal to one. By this measure, the current average revolution time duration is computed based on one or more exact complete rotor revolution time durations so that potential sector length variations completely compensate each other.

Moreover, owing to the immediate consecutiveness, it may be determined easily by computing the sum for a newly received time duration by adding same to the sum derived for the immediately preceding time duration, and subtracting the time duration of the $M^{th}$ preceding time duration forming an addend of the previous sum, but not of the current sum. In case of choosing the integer to be one, the current average revolution time duration is, on the one hand, quite actual, while nevertheless being pretty stable against measurement inaccuracies of the time durations.

In accordance with an embodiment, the electric motor is a multi-pole-pair motor and the rotor comprises pp > 1 pole pairs with a number of the electric magnetic field sensors being three and the number of sectors N=pp*6. Here, one full mechanical revolution comprises more than one electrical revolution, but nevertheless, the rotation measurement concept outlined herein comes along without an incremental encoder with index channel or without an absolute encoder.

In accordance with a further embodiment of the present application, in addition to the length value for each sector, an offset length value for offsetting the stored length values of the sectors so that a sum of the stored length values of all sectors exactly corresponds to one revolution, is stored and updated along with each update of an individual stored length value. Storing the offset length value in addition to the stored length values of all sectors reduces the amount of storage access tasks, thereby rendering the calibration efficient.

While the determination of the current average revolution time duration of the motor based on the time durations of the sequence of time durations themselves comes along with the fact that the update of the stored length values may occur at a broad range of rotor speeds and during moments of non-zero acceleration, in accordance with an embodiment, the update process is implemented in a manner aware of the current speed of the rotor and/or the current acceleration of the rotor. In other words, the updating of the stored length value for the current sector based on the current average revolution time duration and the current time duration may be made dependent on the current speed of the rotor and the current acceleration of the rotor. In accordance with an embodiment of the present application, the updating is performed by determining a currently measured length value for the current sector based on the current average revolution time duration and the current time duration, and changing the stored length value of the current sector towards the currently measured length value for the current sector by an amount which depends on the current speed of the motor and/or the current acceleration of the rotor. For instance, at least within a predetermined rotor speed interval which may cover, for instance, the complete allowed speed interval from zero towards the maximum speed for which the electric motor is designed, the change of the stored length value towards the currently measured length value may be made so that the amount by which the change is performed is the higher the higher a current speed of the motor is, thereby accounting for the fact that the time durations are less reliable for slower speed than for higher speed, and/or the lower the higher a current acceleration of the rotor is, thereby accounting for the fact that too much speed change during a current revolution and a current sector traverse, respectively, may negatively affect the sector length determination.

For instance, the determination of the amount may be done by determining a pair of weights $(1-\lambda)$ and $\lambda$ with $(1-\lambda)$ being determined so as to be the higher the higher a current speed of the rotor is and/or the lower the higher a current acceleration of the rotor is, and replacing the stored length value for the current sector by an updated length value corresponding to a sum of the stored length value for the current sector times $\lambda$ and the currently measured length value for the current sector times $(1-\lambda)$.

The rate or the amount may be determined so as to 1) linearly change between an upper and a lower bound according to an inverse of the current speed of the motor and/or 2) linearly change between an upper and a lower bound according to a current acceleration of the rotor and/or 3) leave the stored length value unchanged if the current speed of the motor is below a predetermined limit.

The current average revolution time duration may be used as an estimate for an inverse of the current speed of the motor. Additionally or alternatively, the current acceleration of the rotor may be estimated based on the current average revolution time duration and a previously obtained average revolution time duration determined based on a sum of earlier M time durations of the sequence of time durations, divided by a time separating the M time durations and the earlier M time durations.

Additionally or alternatively to the above possibilities, there may be a stored position value for each of the borders between the sectors, which stored position values are stored in addition to the stored length values for the sectors, with a stored position value indicating a position of the respective border or a positional offset of the respective border from an equidistributed arrangement of the borders. The stored position values might be used for the measurement of a rotation of the rotor such as, for instance, for a commutation of the electric motor. Intermittently, the stored position values may be updated based on the stored length values.

Additional advantages are the subject of the dependent claims.

Preferred embodiments of the present application are described below with respect to the figures among which:

Fig. 1          shows a schematic block diagram of a driving part of an exemplary electric motor in relation to which embodiments according to the invention might be used,

Fig. 2          shows a schematic block diagram of a sensor part of the exemplary electric motor in relation to which embodiments according to the invention might be used,

Fig. 3          shows a block diagram of an apparatus for rotation measurement of a rotor of an electric motor in accordance with an embodiment of the present invention,

Fig. 4          shows a schematic block diagram of an apparatus for rotation measurement of a rotor of an electric motor in accordance with a further embodiment of the present invention, according to which the length values update is made speed and/or acceleration dependent;

Fig. 5a            shows a graph illustrating a relationship between $\lambda$ (x axis) and $T_{MechTurn}$ (y axis) used in controlling the length values update according to an embodiment;

Fig. 5b            shows a graph illustrating the relationship between the cutoff frequency Fc and the velocity in controlling the length values update according to an embodiment;

Figs. 6a and 6b    show graphs of the convergence time for different velocities, with Fig. 6a showing the relationship with both axes being linear, while Fig. 6b shows the relationship with both axes being logarithmic;

Fig. 7             shows another embodiment for an apparatus for rotation measurement of a rotor of an electric motor in accordance with a further embodiment of the present invention, according to which position values are stored in addition to length values.

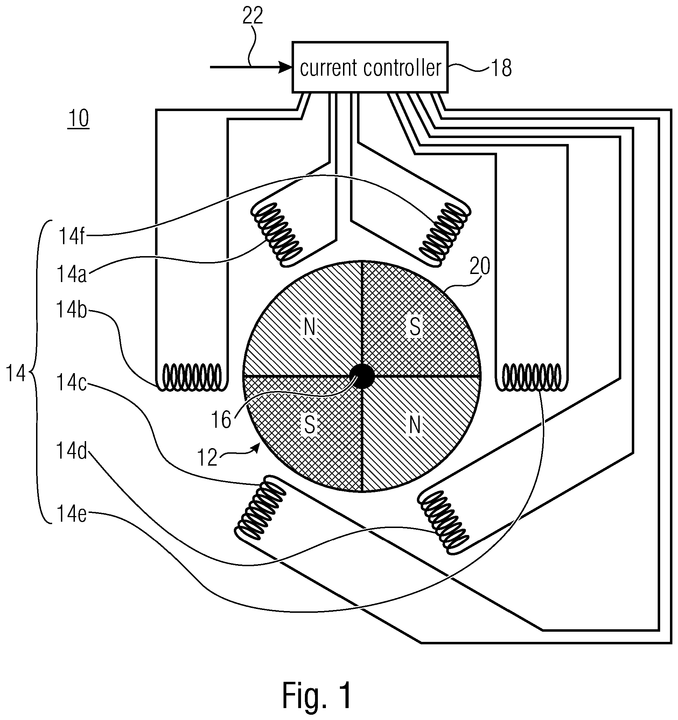

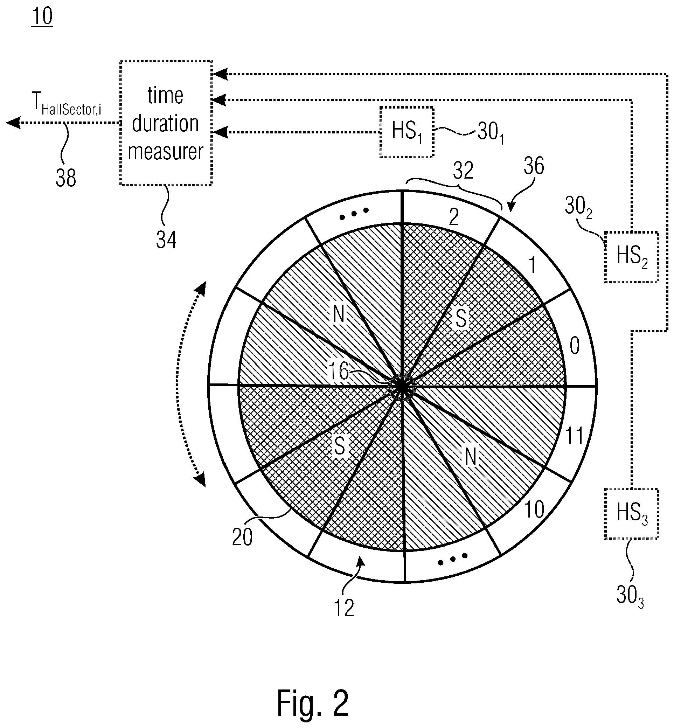

In the following various embodiments of the present application are described. Prior to this, however, the description starts with a presentation of an example for an electric motor in relation to which the subsequently described embodiments might be used. The description of such an example for an electric motor is presented with respect to Figs. 1 and 2, wherein Fig. 1 shows the driving part of the electric motor, whereas Fig. 2 shows the sensor part of the electric motor. In both figures, the electric motor is assumed to be a two-pole-pair motor, but this is only an example and the embodiments described further below are not restricted to be used along such kind of electric motor.

Fig. 1 shows the electric motor 10 as comprising a rotor 12 surrounded by a stator 14 here exemplary comprising six coils or electromagnets 14a to 14f equiangularly or equidistantly arranged around rotor 12. Stator 14 and rotor 12 are, thus, co-axially arranged around rotation axis 16. Rotor 12 is supported in order to freely rotate around axis 16 and by appropriately applying current onto electromagnets 14a to 14f, the rotor driven to rotate clockwise or counter-clockwise around axis 16, thereby moving, for instance, a certain object such as a gear via a motor shaft which is not shown in Fig. 1 and might be attached to the rotor 12 co-axially. A current controller 18 of motor 10 applies a current onto each of electromagnets 14a to 14f.

Motor 10 has several poles 20 which are of mutually opposite polarization with the poles alternating along rotation direction. That is, when tangentially traversing rotor 12, the pole sequence is south, north, south, north. Each of the poles 20 spans a sector of 180/pp degrees with pp being the number of pole pairs which is 2 in the present example. In order to optimally drive rotor 12, current controller 18 may switch the polarization of each electromagnet 14a to 14f each time the pole 20, which currently passes by the respective electromagnet, is centered with respect to the respective electromagnet. The current switching performed by current controller 18 is called commutation. Instead of applying the just-outlined block commutation, current controller may use a "field-oriented control" aiming at performing current commutation of the currents to the magnets 14a to 14f in such a manner that a resulting magnetic stator field acting on the rotor is always optimal, i.e. perpendicular to the rotor's magnetic poles. Current controller 18 may be configured to perform the commutation responsive to a commutation signal 22 in order to perform the commutation optimally angularly adjusted to the rotor's 12 rotation.

A note shall be made with respect to the poles 20 shown. While these poles might be the poles interacting with the stator's magnetic field, they might alternatively be extra poles of an extra magnetic ring present in addition to some magnet of the rotor ought to interact with the stator's field, which might be axially offset from the stator magnetic field so as to allow for a measurement be the sensors 30a to 30c which is not disturbed by the stator's field. In a two-pole-pair motor, as exemplarily shown here in Fig 1, the number of electromagnets coils could be six as shown, with the motor being a three-phase motor, but the invention in not restricted to the number of electromagnets shown. The number could be different and the motor could be a two-phase motor.

Fig. 2 shows the electric motor as additionally comprising magnetic field sensors, such as Hall sensors, $30_1$, $30_2$ and $30_3$ statically arranged in proximity to rotor 12, such as radially around or axially offset to rotor. That is, sensors $30_1$ $30_2$ and $30_3$ may be attached to stator 14 or be arranged in a statically fixed manner with respect to the stator 14 and, with respect to axis 16, they may be arranged in an equiangular or equidistanced manner around axis 16, with a 120/pp degree angle between sensor $30_1$ and $30_2$ and between sensor $30_2$ and $30_3$, respectively, wherein pp is, again, the number of pole pairs which is exemplarily 2 in case of Fig. 2. The sensors $30_1$ to $30_3$, thus, individually sense whether there is a south polarized pole 20 of motor 10, or a north polarized pole, respectively, currently passing by. Due to the 180/pp degree wide poles 20 on the one hand and the mutually 120/pp degree distanced arrangement of sensors $30_1$ to $30_3$, on the other hand, the angular positions of rotor 12 relative to the arrangement of sensors $30_1$ to $30_3$, namely one full revolution of the rotor 12, are partitioned into 6*pp sectors 32, i.e. in case of Fig. 2 12 sections 32. The angular width or length of these sections 32 should be equal among the section 32, but due to tolerances in the placement of sensors $30_1$ to $30_3$ and/or tolerances in the dimensioning of poles 20, the sections 32 vary in length mutually.

A time duration measurer 34 is connected with sensors $30_1$ to $30_3$ to receive the sensor signals and evaluate the pattern defined by these signals. In particular, within each sector 32, the pattern remains constant, but at the borders 36 between these sectors 32, one of the signals switches, also called Hall or signal event in the following description, thereby indicating that the rotation of rotor 12 enters a new sector. The time duration measurer 34 outputs a sequence of time durations called $T_{HallSector,i}$, indicative of the time duration between immediately consecutive events, i.e. the time duration needed by rotor 12 to rotate from one border across one sector to the next border of that sector.

It should be noted that the following description assumes that time duration measurer 34 outputs the sequence 38 of time durations such that each time duration exactly corresponds to one sector 32 and indicates, accordingly, the time passed from the time instant onwards at which the sensor signal is switched to the sensor pattern corresponding to that sector, to the time instant at which the sensor signal is switched to a different pattern of a subsequent sector. However, for high rotor speeds, time duration measurer 34 may sometimes output time durations relating to the rotor 12 having passed two consecutive sectors 32 or even more than two sectors. In that case, time duration measurer 34 may optionally accompany the sequence 38 of time durations with a signal being indicative of the number of sectors to which each time duration relates. The embodiments described below assume that each time duration relates to one sector only, but the description brought forward below does also reveal possible measures which could be taken in order to adapt the embodiments described to deal with occasions where some time durations relate to more than one sector.

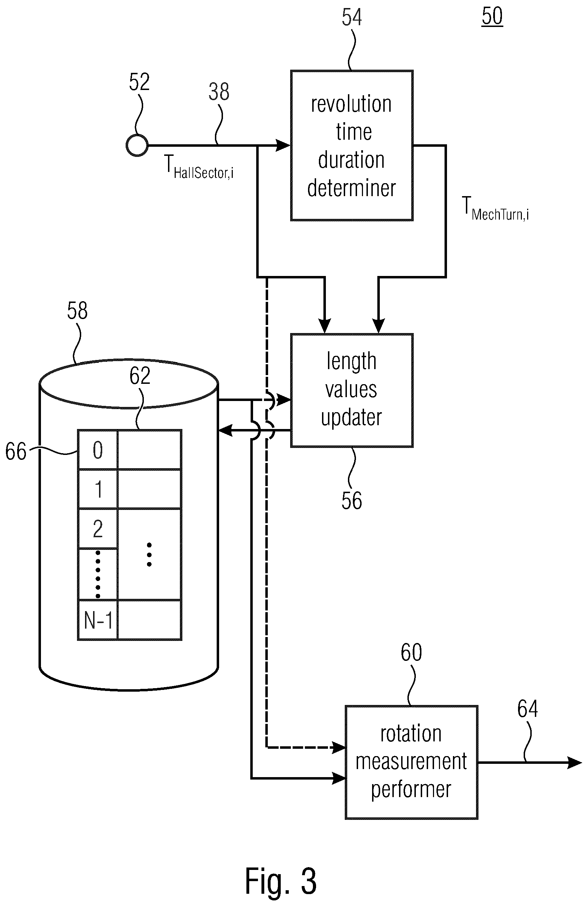

After having described with respect to Figs. 1 and 2 a possible electric motor with respect to which the embodiments described below could be implemented, the description now resumes with a description of Fig. 3 which shows an apparatus for rotation measurement of a rotor of an electric motor in accordance with an embodiment of the present application. As shown in Fig. 3, the apparatus of Fig. 3, which is generally indicated with reference sign 50, is configured to receive, or comprises an input 52 for a sequence 38 of time durations $T_{HallSector,i}$, which passed between consecutive changes of the magnetic field sensors' output signals. Further, apparatus 50 comprises a revolution time duration determiner 54, a length values updater 56, a length value storage or look-up table 58, and a rotation measurement performer 60. Revolution time duration determiner 54 and length values updater 56 both receive the sequence 38 of time durations and the length values updater 56 additionally receives a current average revolution time duration output by revolution time duration determiner 54. Storage 58 stores, for each sector 32, a stored length value 62, called $\overline{e}_{L,j}$, and is connected with length values updater 56 to receive from the latter updates of the stored length values 62. The rotation measurement performer 60 is configured to use the stored length values 62 for performing a measurement of a rotation of the rotor and is, to this end, connected to storage 58 to receive the stored length values 62 therefrom. The rotation measurement performer 60 outputs an output signal 64 of the measurement of rotation.

The mode of operation of apparatus 50 is as follows. The apparatus 50 of Fig. 3 is attachable or connectable to the output of time duration measurer 34 of Fig. 2 in order to receive the sequence 38 of time durations. As described with respect to Fig. 2, owing to the arrangement of magnetic field sensors $30_1$ to $30_3$ in proximity to rotor 12 and around axis 16 and the partitioning of rotor 12 into poles 20, the rotation of rotor 12, i.e., the domain of angular positions of rotor 12, is partitioned into sections 32, namely such that the partitioning is repetitive with each full revolution and each full revolution is partitioned into N, in the example of Fig. 2 12, sections 32. The partitioning is fixed with respect to sensors $30_1$ to $30_3$ and, accordingly, the electric motor's stator 14 and, ideally, sections 32 were equal in length, angularly or in rotation direction, if there were no tolerances, but owing to the aforementioned fabrication tolerances, the sections are not of equal length.

During operation, apparatus 50 receives the sequence 38 of time durations and at least within a certain rotor speed interval which may span speeds up to a certain speed which depends on a sample or processing frequency of time duration measurer 34, each time duration $T_{HallSector,i}$, is indicative of the time needed by rotor 12 in order to, in rotating, traverse exactly one of the sectors 32. For instance, an arbitrary, non-axial point of rotor 12 may define the current angular or rotational position of rotor 12 and each time duration measures the time this angular position passes a respective sector 32. Moreover, assuming that rotor 12 rotates into one direction, i.e., clockwise or counter-clockwise, the sectors 32 which the time durations $T_{HallSector,i}$ refer to, were immediately consecutive in angular direction and a modular operator applied onto the index i of the sequence 38 of time durations would directly result into an index indicating the sector 32 to which the respective time duration $T_{HallSeotor,i}$, relates to. In other words, as long as rotor 12 rotates into one direction, time duration $T_{HallSector,i+1}$, relates to the sector 32 which is directly adjacent to the sector 32 to which $T_{HallSector,i}$ relates to, and subsequent relative to the latter sector 32 along that rotation direction. With respect to the sections 32, this means that same may be indexed with consecutive and increasing indices in clockwise or counter-clockwise direction such as from 0 to N-1 as illustrated in Fig. 2 by using corresponding numbers, here in counter-clockwise direction, and that, as long as the rotation direction of rotor 12 remains constant, time duration $T_{HallSector,i}$ may easily attributed to the sector j which it relates to by a function Sector(i)=j which uses a modulo operator applied to i. Note that, however, there is ambiguity as to which sector j a sensor pattern of sensors $30_1$ - $30_3$ relates to in case of the electric motor being a multi-pole-pair motor as depicted in Fig. 2 due to pp electrical revolutions being contained in one mechanical revolution. In case of a multi-pole-pair motor it is, thus, not possible to uniquely determine j based on the sensor pattern. According to an embodiment, apparatus 50 arbitrarily assigns, for instance, a first-time duration $T_{HallSector,0}$ to sector j=0. Assuming that rotator 12 then rotates into the direction of ascending sector indices, modulus(i) of the sequence 38 of time durations would then yield the sector index j of sector 32 which $T_{HallSector,i}$ relates to. However, different embodiments exist as well, such as an evaluation of the sensor pattern of sensors $30_1$ to $30_3$ in order to assign one of the pp sectors 32 to time duration $T_{HallSector,i}$ for which this signal pattern is representative.

As described, apparatus 50 comprises a storage 58 storing stored length values 62, namely one for each sector 32. Storage 58, thus, represents a look-up table storing one stored length value 62 for each sector 32 with Fig. 3 illustrating this look-up table by showing each stored length value 62 and the sector index 66 of its associated sector side by side. Storage 58 needs not to be a non-volatile memory. Storage 58 may be a volatile memory which might be, when apparatus 50 starts is operation, initialized in such a manner that the stored length values either indicate the lengths of the sectors 32 in a manner so that all sectors 32 have the same length, or that they indicate zero deviation of the lengths of the sectors 32 from this equal-length state. In accordance with an embodiment, the initialization may, thus, be such that all sectors 32 are of angularly equal length according to the stored length values 62.

The rotation measurement performer 60 uses the stored length values 62 to perform a measurement of rotation of rotor 12. For instance, rotation measurement performer 60 may also use the sequence 38 of time durations in order to determine, for instance, as the output signal 64, the rotation speed of rotor 12, namely by forming, for each $T_{HallSector,i}$, a ratio between the length of sector i divided by $T_{HallSector,i}$, with the length being determined based on the stored length value 62 for sector i. Likewise, the output signal 64 may additionally or alternatively indicate when a commutation should take place, i.e., might additionally or alternatively indicate commutation signal 22 shown in Fig. 1.

During operation, apparatus 50 aims at improving the stored length values 62 by consecutive updates. A prerequisite is provided by revolution time duration determiner 54. Revolution time duration determiner 54 determines a current average revolution time duration of the rotor, $T_{MechTurn,i}$, by computing

$$T_{MechTurn,i} = \sum_{k=0}^{M-1} T_{HallSector,i-k}$$

wherein M is chosen to be an integer multiple of N, i.e., the number of sectors 32, wherein the integer may be chosen to be one, for instance. Note that the determined revolution time duration is not affected by the aforementioned fabrication tolerances, because the time durations relate to a full revolution (at least one full revolution or an exact multiple of one full revolution). It should be noted, however, that the revolution time duration determiner 54 may likewise determine the revolution time duration $T_{MechTurn,i}$ slightly differently based on a sum of M time durations with $M \geq N$ with considering, for instance, that the influence of the sectors' variance in length only slightly disturbs the revolution time duration thus determined owing to the formation of the sum which spans, at least, one complete revolution. In order to lower the computational load, the revolution time duration determiner 54 may compute the sum of the most recent M time durations by simply updating the previously determined $T_{MechTurn,i-1}$. That is, revolution time duration determiner 54 may, for instance, determine $T_{MechTurn,i}$ so that $T_{MechTurn,i}$ fulfils the above equation, but in doing so, revolution time duration determiner 54 may compute $T_{MechTurn,i}$ according to

$$T_{MechTurn,i} = T_{MechTurn,i-1} + T_{HallSector,i} - T_{HallSector,i-M} .$$

By this measure, the computational load is reduced, especially in case of the number of pole pairs pp of the motor 10 being high.

A brief note shall be made with respect to the functionality of apparatus 50. As already noted above, it might be that the inbound time durations $T_{HallSector,i}$ sometimes relate to more than one sector, or that a change in rotation direction of rotor 12 takes place. In such a case, revolution time duration determiner 54 may interrupt the computation of the revolution time duration $T_{MechTurn,i}$ and wait until M consecutive time durations $T_{HallSector,i}$ again fulfil the one-to-one association between time duration and sector 32. In other words, revolution time duration determiner 54 may determine $T_{MechTurn,i}$ only for inbound $T_{HallSector,i}$ whose preceding M-1 $T_{HallSector,i-1...i-M+1}$ all relate to one sector with these sectors being consecutive in one rotation direction. Note further that revolution time duration determiner 54 needs not to compute $T_{MechTurn,i}$ for each inbound $T_{HallSeotor,i}$. Rather, the determination may be made more infrequently such as for every $m^{th}$ inbound $T_{HallSector,I}$, wherein m might be N or M, for instance. $T_{MechTurn,i}$ may then equal the most recently determined revolution time duration.

The length values updater 56 receives $T_{HallSector,i}$ and $T_{MechTurn,i}$ and updates, based thereon, the stored length value for the sector to which $T_{HallSector,i}$ relates to, according to

$$L_{Sector(i)} = \frac{T_{HallSector,i}}{T_{MechTurn,i}} .$$

In the above equation, the function Sector() maps index i onto the sector index. For instance, the function may use the modulus operator, i.e., Sector(i) may be modulus(i,N)=$mod_N i$.

Alternatively, the stored length values 62 updated by updater 56 are indicative of a length deviation for each sector 32, and in that case updater 56 may compute a stored length value

$$e_{L,Sector(i)} = N \frac{T_{HallSector,i}}{T_{MechTurn,i}} - 1.$$

As will become clearer from the embodiments described further below, length values updater 56 may use the just-outlined newly-computed length or length deviation values not directly in order to update or replace the corresponding stored length value 62 in storage 58, but may perform this update depending on a current speed or acceleration of rotor 12 with controlling based therein the mount at which a currently stored length value for a sector j is changed towards the newly determined one $e_{L,j}$. This functionality will become clearer from the subsequently explained embodiments.

In any case, in the manner described above, length values updater 56 continuously updates the stored length values 62 in storage 58 and the rotation measurement performed by performer 60, which makes use of the stored length values 62, thus takes advantage of the updated values 62 with a consequence that the output signal 64 becomes improved due to the updates of the length values in storage 58. Remarkably, storage 58 needs not to be implemented by a non-volatile memory and no pre-shipment offline calibration is necessary in order to pre-fill storage 58 with any value 62. Rather, apparatus 50 builds the look-up table in storage 58 on its own, i.e., online, during the operation of apparatus 50. To this end, apparatus 50 solely relies on the sequence of time durations, i.e., sequence 38. Even further, the concept is usable despite any ambiguity between the association of the signal pattern provided by sensors $30_1$ to $30_3$ on the one hand and sectors 32 on the other hand such as owing to the number of pole pairs pp being greater than 1.

Some notes shall be made with respect to Fig. 3 before proceeding to the description of the next embodiment. For instance, revolution time duration determiner 54 may, as described above, recalculate the revolution time duration for every inbound time duration $T_{HallSector,i}$, but this may also be done differently and revolution time duration determiner 54 may determine the revolution time duration not for every inbound time duration anew, but for every second, third ... or for every N or M inbound time duration for instance. In that case, in the above formulae, $T_{MechTurn,i}$ may denote the most recently determined revolution time duration. Moreover, different possibilities exist with respect to the association of each inbound time duration $T_{HallSector,i}$, and the sectors 32 via Sector (i), and the use of the modulus function is only an example which needs to be modified, for instance, if the rotor 12 rotates into a direction contrary to the direction of ascending sector indices. Moreover, apparatus 50 may take special measures in case of rotor 12 changing its rotation direction. In that case, apparatus 50 may reinitialize the stored length value 62 in storage 58 again and start the calibration procedure anew. Further, in order to avoid situations where the association between the sector index on the one hand and the inbound time durations $T_{HallSector,i}$ becomes wrong due to, for instance, high rotor velocities, intermittently, apparatus 50 may reinitialize the stored length value 62 in order to avoid situations where, by accident, apparatus 50 proceeds to operate with an unknown wrong association.

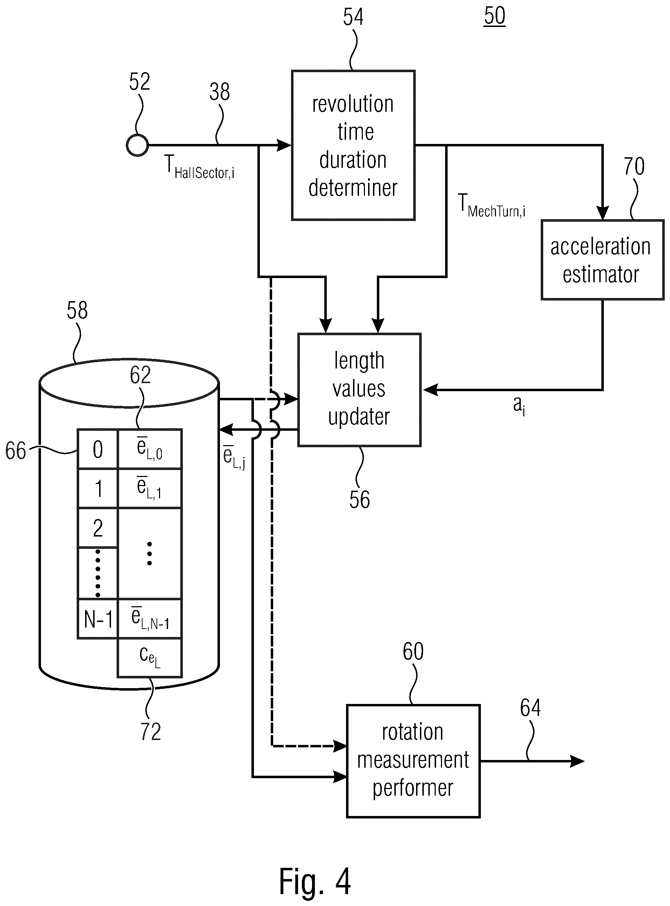

As already described above, with respect to Fig. 3, it is possible that a length values updater 56 updates the stored length value 62 in a manner dependent on speed and/or acceleration of rotor 12. In particular, it might be that the update is performed relative to the respective currently updated stored length value in that the new length value $e_{L,j}$ is not used directly so as to completely replace the respective stored length value 62, but the update is done in a manner so as to modify the stored length value 62 towards the newly computed one, with the amount, i.e., the fact whether the stored length value stays nearer to its non-updated value or becomes nearer to the newly computed one, depends on the rotor speed and/or rotor acceleration. The latter circumstance is described in more detail with respect to Fig. 4.

In accordance with Fig. 4, the apparatus 50 additionally comprises an acceleration estimator 70 connected between the output of the revolution time duration determiner 54 and another input of length values updater 56. The acceleration estimator 70 is configured to compute a current acceleration estimate $a_i$ based on a difference between two consecutively determined revolution time durations such as the most recently determined two revolution time durations or the most recent one and one determined for the $K^{th}$ earlier rank in sequence 38 according to

$$\alpha_i = \frac{\dfrac{N}{T_{MechTurn,i}} - \dfrac{N}{T_{MechTurn,i-K}}}{\sum_{k=0}^{K-1} T_{HallSector,i-k}}$$

K is an integer and may be 1. Note that for K<M the $T_{HallSector,i}$ based on which $T_{MechTurn,i}$ and $T_{MechTurn,i-k}$ are computed overlap by M-K $T_{HallSector,i}$. For K = 1, we yield:

$$\alpha_i = \frac{\dfrac{N}{T_{MechTurn,i}} - \dfrac{N}{T_{MechTurn,i-1}}}{T_{HallSector,i}}$$

Thus, the acceleration estimator provides estimates on the acceleration based on the sequence 38 of time durations and, in accordance with the embodiment of Fig. 4, based on the revolution time durations determined by determiner 54. In line with a note made above, it should be noted that the estimate of the angular acceleration $a_i$ might be made at a lower frequency than for every new time duration $T_{HallSector,i}$ such as at the same frequency as the revolution time duration determination. If, for instance, acceleration estimator 70 determines the acceleration $a_i$ for every new revolution time duration $T_{MechTurn,i}$, and the latter is not determined for every i, then, in the above formula, the denominator may be the sum of all $T_{HallSector,i}$ separating the M time durations based on which these most recently determined revolution time durations have been determined.

As to velocity and speed, the revolution time duration $T_{MechTurn,i}$ may be used as a corresponding measure, namely an inversely related measure of the speed or velocity. The velocity n could be computed by updater 56 according to

$$n_i = \frac{1}{T_{MechTurn,i}}.$$

In the embodiment of Fig. 4, the length values updater 56 updates the stored length value $\bar{e}_{L,j}$ of Sector(i) corresponding to current time duration $T_{HallSector,i}$ by changing the latter towards newly computed $e_{L,j}$ with the aforementioned amount by which this change is done, being determined by updater 56 based on $T_{MechTurn,i}$ as well as $a_i$, but in accordance with variants, only one of the dependencies could be used. Details are set out in more detail below. In any case, owing to the fact that the length values updater 56 of Fig. 4 renders the update dependent on the just-mentioned speeds and/or acceleration of rotor 12, length values updater 56 is also coupled with storage 58 in a manner so as to receive therefrom the respective currently stored length value $\bar{e}_{L,j}$.

In accordance with an embodiment, updater 56 performs the update of a certain stored length value $\bar{e}_{L,j}$ according to

$$\bar{e}_{L,j} \leftarrow \lambda\left(\bar{e}_{L,j-1} - e_{L,j}\right) + e_{L,j} = \lambda\bar{e}_{L,j-1} + (1 - \lambda)e_{L,j} \qquad ,j \in [0, N-1]$$

wherein $\lambda$ serves as a weight controlling the amount by which the currently stored length value is left as it is, namely if $\lambda$=1, or by which the currently stored length value is completely replaced by the newly computed one, namely if $\lambda$=0, or where in between these extremes the amount is. $\lambda$, thus, acts as a discrete time low pass filter coefficient in that it controls how fast the not yet updated stored length value 62 approaches the final target value and the corresponding convergence time is related to that $\lambda$ in that the convergence time is the larger the larger $\lambda$ is, with being infinity in case of $\lambda$=1 and being equal to the update rate of updater 56 in case of $\lambda$=0.

In accordance with an embodiment, updater 56 uses the following equation in order to determine $\lambda$ so to implement a speed-dependent low pass filtering in updating the stored length value 62, namely

$$\lambda_{unlimited} = \lambda_{min} + K_\lambda K_\alpha T_{MechTurn,i}$$

$$\lambda = Limit(\lambda_{unlimited}, [\lambda_{min}, \lambda_{max}])$$

Wherein $\lambda_{min}$ and $\lambda_{max}$ are upper and lower bounds for $\lambda$ with $0 \le \lambda_{min} < \lambda_{max} \le 1$. The function Limit(..., ...) leaves the first argument unaltered in case of being within the interval defined in the second argument and otherwise outputs the lower limit of the interval in case of the first argument being smaller than the lower limit, and the upper limit in case of the first argument being higher than the upper limit of the interval. $K_\lambda$ is a gain factor and is related to the upper and lower bounds $\lambda_{min}$ and $\lambda_{max}$ according to

$$K_\lambda = \frac{\lambda_{max} - \lambda_{min}}{T_{MechTurn,max}} = (\lambda_{max} - \lambda_{min})n_{min}$$

wherein $T_{MechTurn,max} = 1/n_{min}$ indicates the slowest revolution time duration from which onwards the update by updater 56, i.e., the amount of change, shall be effective for fast rotor speeds. The thinking here is that for very low speeds, the product of $K_\lambda$ and $T_{MechTurn,i}$ becomes larger than $\lambda_{max}$ - $\lambda_{min}$ and, due to the clipping if the Limit function, $\lambda$ remains $\lambda_{max}$, i.e., the update remains slow. For higher speeds, $T_{MechTurn,i}$ becomes smaller, so that the product becomes smaller, so as to approach zero for very high speeds so that $\lambda$ approaches $\lambda_{min}$ corresponding to the fastest update by updater 56.

That is, in updating a certain currently stored length value $\bar{e}_{L,j}$, updater 56 computes $\lambda$ by using $T_{MechTurn,i}$ with Sector(i) = j, and performs the update using this $\lambda$ according to the above-outlined formula relating the newly-computed length value $e_{L,j}$ to length value $\overline{e}_{L,j}$.

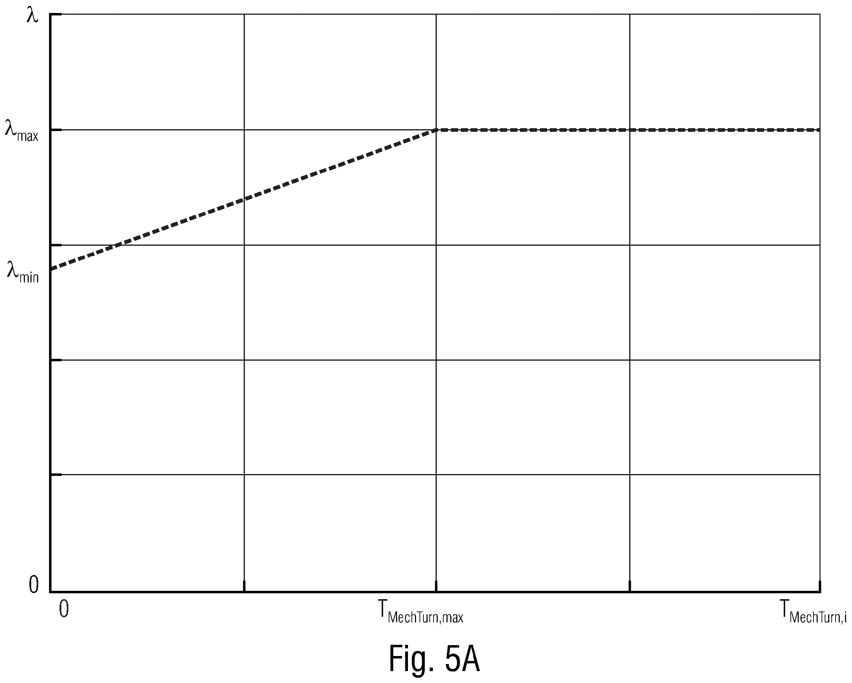

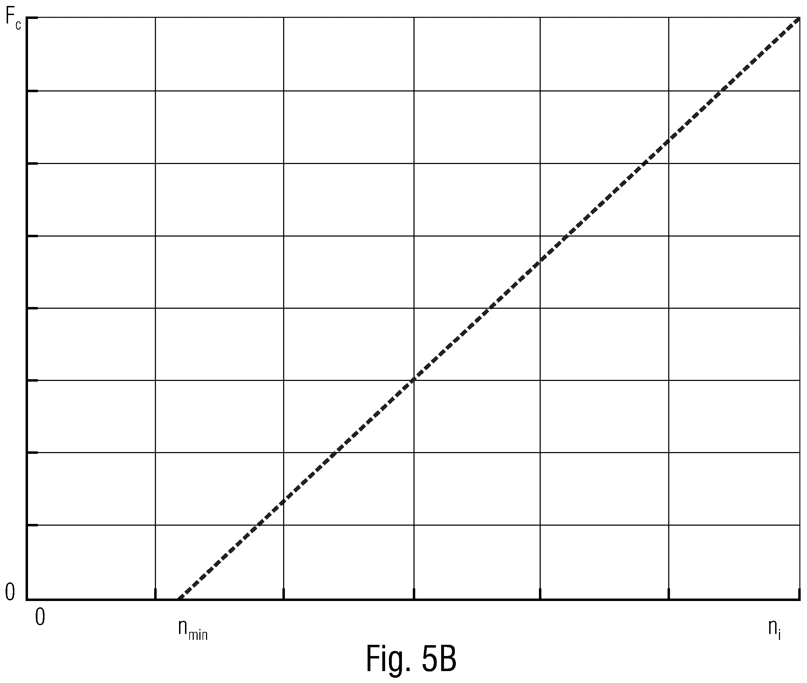

Fig. 5a illustrates the relationship between $\lambda$ and $T_{MechTurn,i}$ and illustrates the linear increase of $\lambda$ from $\lambda_{min}$ at zero revolution time duration to $\lambda_{max}$ at $T_{MechTurn}$, max, i.e., the minimum velocity, from which onwards towards higher revolution time durations and slower velocities, respectively, $\lambda$ remains constant. Fig. 5b illustrates the relationship between the cutoff frequency Fc and the velocity $n_i$: A linear increase from zero takes place from the minimum velocity onwards. Below that, the cutoff frequency is zero. In both figures, $K_\alpha$ is assumed to be one.

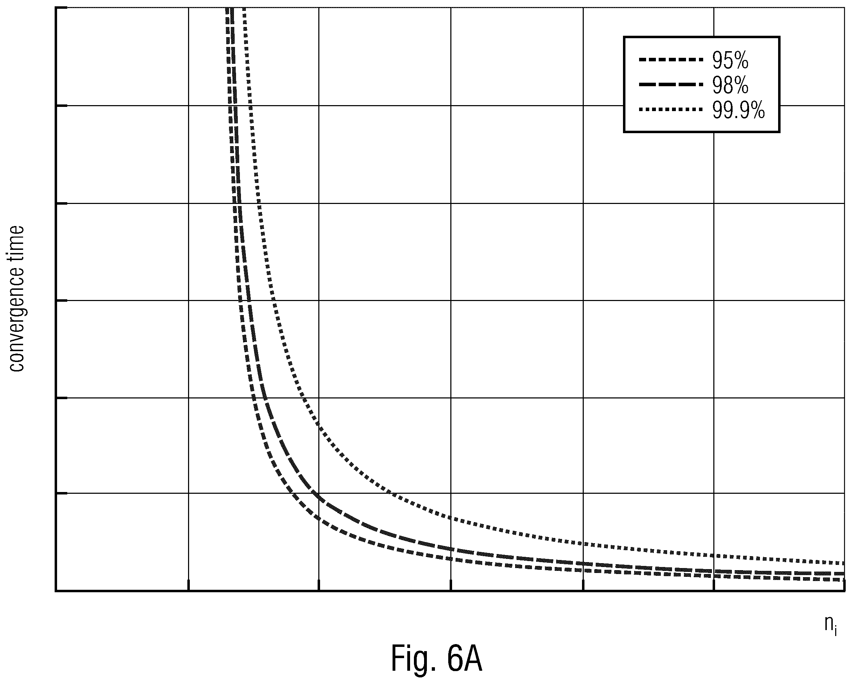

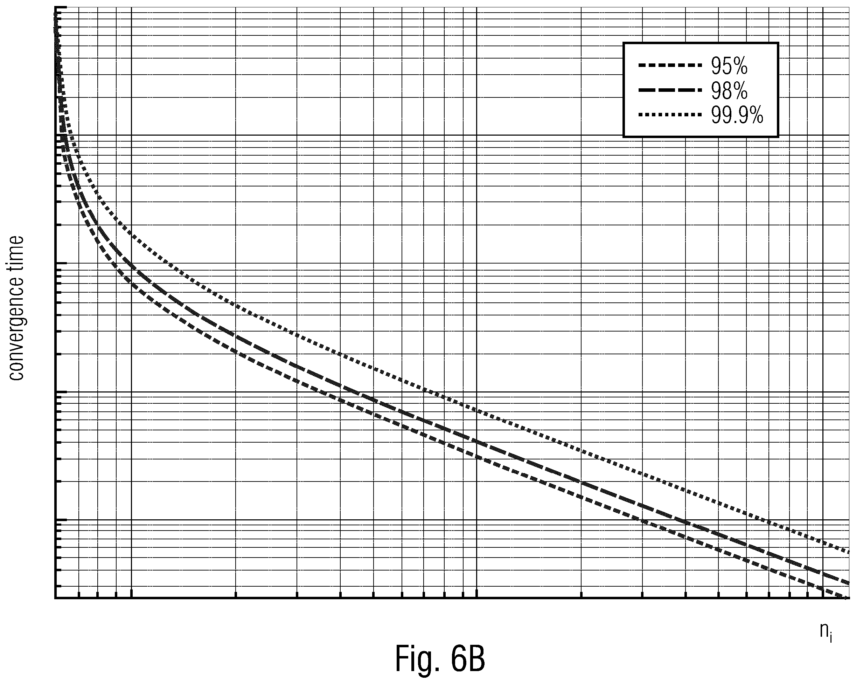

Figs. 6a and 6b show convergence times for different velocities, with Fig. 6a showing the relationship with both axes being linear, while Fig. 6b shows the relationship with both axes being logarithmic. As can be seen, the convergence time rapidly reduces with increasing velocity.

The other, not yet discussed gain factor $K_\alpha$ is a punishment factor for high acceleration. $K_\alpha$ is computed according to

$$K_{\alpha,unlimited} \;=\; K_{\alpha,min} \;+ \frac{K_{\alpha,max} \,-\, K_{\alpha,min}}{R_{\Delta n,max}} \,|R_{\Delta n,i}|$$

$$K_\alpha \;=\; Limit(K_{\alpha,unlimited} \,, [\, K_{\alpha,min}, K_{\alpha,max}])$$

Wherein parameters $K_{\alpha,min}$ and $K_{\alpha,max}$ and $R_{\Delta n,max}$ are appropriately set limits for the value range of $K_\alpha$ and a maximum for the relative speed change in one mechanical revolution, $R_{\Delta n,i}$, above which $K_\alpha$ does not further increase. $R_{\Delta n,i}$ is a measure for acceleration $a_i$ and computed based on the acceleration according to

$$R_{\Delta n,i} \;=\; \frac{a_i T_{MechTurn,i}}{n_i}.$$

Note that estimator 70 might compute $R_{\Delta n,i}$ directly rather than computing $a_i$ with the updater computing $R_{\Delta n,i}$ based thereon. The function Limit() is, again a function clipping the first attribute to the interval indicated in the second attribute. The parameters $K_{\alpha,min}$, $K_{\alpha,max}$, may be set to 1 and 10, respectively.

As indicated above, the dependency of the update amount or $\lambda$ on the acceleration may be left off such as by

$$\lambda_{unlimited} = \lambda_{min} + K_\lambda T_{MechTurn}$$

$$\lambda = Limit\big(\lambda_{unlimited,}[\lambda_{min}, \lambda_{max}]\big)$$

Likewise, the dependency on velocity could be left off, and the update amount or $\lambda$ could be set according to

$$\lambda_{unlimited} = \lambda_{min} + K_\alpha \cdot \frac{\lambda_{max} - \lambda_{min}}{K_{\alpha,max} - K_{\alpha,min}}$$

$$\lambda = Limit\big(\lambda_{unlimited,}[\lambda_{min}, \lambda_{max}]\big)$$

That is, according to the above formulae, the stored length value 66 towards a currently measured length value is changed by an amount, which is - within a predetermined rotor speed interval - the higher the higher a current speed of the rotor is, and/or the lower the higher a current acceleration of the rotor is, wherein in the above examples, the predetermined rotor speed interval actually covers all speeds allowed, but it might be that the dependency is restricted to be used in a certain interval only such as in the interval from speed zero to the maximum speed of guaranteeing the one-to-one association between sectors and time durations as explained above. Furter, according to the above formulae, the stored length value 66 towards a currently measured length value is changed by determining a weight (1 - $\lambda$) between 0 and 1 so as to be - within a predetermined rotor speed interval - the higher the higher a current speed of the rotor is, and/or the lower the higher a current acceleration of the rotor is, and replacing the stored length value by an updated length value which corresponds to the sum of the stored length value for the current sector times $\lambda$ and the currently measured length value for the current sector times (1 - $\lambda$). Again, in the above examples, the predetermined rotor speed interval actually covers all speeds allowed, but it could be that the formulae are restricted to be used in a certain interval of speeds only such as in the interval from speed zero to the maximum speed of guaranteeing the one-to-one association between sectors and time durations as explained above. Further, as shown, the weight or the amount may be determined so as to strictly monotonically, such as linearly, change between an upper and a lower bound according to an inverse of a current speed of the rotor, and/or strictly monotonically, such as linearly, change between an upper and a lower bound according to a current acceleration of the rotor, and/or leave the stored length value unchanged if the current speed of the rotor is below a predetermined limit. Also here, these dependencies might alternatively only be true in a certain speed interval.

The following notes shall be made with respect to Fig. 4. Firstly, in accordance with an alternative embodiment, the length values updater 56 may rely on other inputs in order to determine the speed/velocity and/or acceleration of the rotor 12. Thus, the latter variables may be determined by updater 56 by other means than relying on $T_{MechTurn,i}$. The acceleration estimator 70 may, accordingly, not be present in accordance with an alternative. Further, Fig. 4 shows another functionality of length values updater 56 which may be present in addition to the description of Fig. 4. This alternative might also extend the functionality described with respect to Fig. 3. In particular, each time length values updater 56 updates any of the stored length value 62, it might happen that the length values 62 do not correspond to one complete revolution. However, ideally, when adding up all lengths $L_j$, we should end up with N, i.e., one complete revolution according to

$$\sum_{j=0}^{N-1} L_j = \sum_{j=0}^{N-1} \left(1 + \bar{e}_{L,j}\right) = N + \sum_{j=0}^{N-1} \bar{e}_{L,j} = N$$

or in other words,

$$\sum_{j=0}^{N-1} \bar{e}_{L,j} = 0$$

However, since $\bar{e}_{L,j}$ is updated one at a time, there is no guarantee that its sum of a one mechanical revolution is 0. To fix this issue, a constant $c_{e_L}$ is introduced and also stored in storage 58 as indicated at 72, and it might be computed and updated by updater 56 each time an update takes place with respect to any sector j according to:

$$c_{e_L} = \frac{\sum_{j=0}^{N-1} \bar{e}_{L,j}}{N}$$

The actual length value for sector j as stored is then $\bar{e}_{L,j} - c_{e_L}$ and the length of that sector is $L_j = 1 + \bar{e}_{L,j} - c_{e_L}$.
Thus, $c_{e_L}$ makes the sum over all $L_j$ to correspond to one complete revolution, namely N, and by concurrently updating $c_{e_L}$ each time one $\bar{e}_{L,j}$ is updated, and by storing the two values separately, the computation complexity is reduced as, actually, the actual length values used by rotation measurement performer 60 are now given by $+ \bar{e}_{L,j} - c_{e_L}$, respectively, indicating the length error for sector j with offset correction.

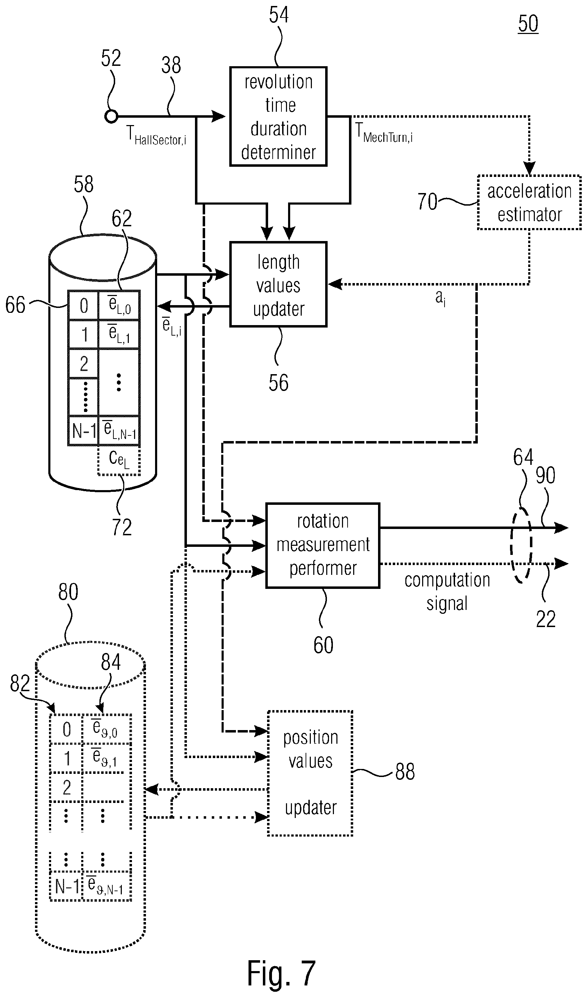

Fig. 7 shows another embodiment for apparatus 50. All elements of Fig. 4 are also elements of the apparatus 50 of Fig. 7 although all elements described with respect to Fig. 4 in addition to those of Fig. 3 shall be interpreted as being optional in the embodiment of Fig. 7. Fig. 7 concentrates on a further functionality of apparatus 50, namely the functionality of also building-up a lookup table for position correction, i.e., a position correction in addition to the length correction realized by the LUT in storage 58.
Accordingly, the apparatus 50 of Fig. 7 additionally comprises a storage 80 which stores, for each of the borders 36 between the sectors 32, also indicated by an index 82, a stored position value 84 which indicates a position of the respective border 36 or a positional offset of the respective border 36 from an equally distributed arrangement of the borders 36. A note shall be made with respect to the index j of a border in relation to the usage of index j with respect to sectors 32: along the direction of increasing indexes j, border j may be located relative to sector j so as to form the trailing end of sector j into the direction of increasing indexes.
Apparatus 50 comprises, in addition to storage 80, a position values updater 88 which is connected to storage 58 to receive the length value 62 and, possibly, the offset length value 72 therefrom, and is connected to storage 80 so as to update the values 82 therein based on the received values from storage 58. While the update as embodied and described in the following is an update according to which the stored values 84 are completely replaced by the newly determined ones, Fig. 7 shows that, according to an alternative embodiment, some sort of lowpass filtering could be implemented as done with respect to the length values and as described with respect to Fig. 4.
In Fig. 7, rotation measurement performer 60 is further connected to storage 80 so as to receive the values 84 and so as to use these position values in order to perform the rotation measurement. In the following, for example, it is described that the performer 60 may use the position signals in order to create an appropriate computation signal 22, which might be used to control current controller 18 with respect to performing the computation in driving motor 10. The computation signal 22 could, accordingly, form part of the output signal 64 in addition to, for example, an output signal indicating a current speed $n_i$ of rotor 12, indicated by 90 in Fig. 7.

The relationship between the length values 62 along with correction value 72 on the one hand and the position values 84 on the other hand, is as follows:

$$L_j = 1 + \bar{e}_{L,j} - c_{e_L} = \theta_j - \theta_{modulus(j-1,N)} = 1 + e_{\theta,j} - e_{\theta,modulus(j-1,N)}, \, j \in [0, N-1]$$

From this, we can derive

$$e_{\theta,j} - e_{\theta,modulus(j-1,N)} = \bar{e}_{L,j} - c_{e_L}$$

And therefore,

$$e_{\theta,j} = \sum_{k=0}^{j} \left(\bar{e}_{L,k} - c_{e_L}\right) - c_\theta, \, j \in [0, N-1]$$

Wherein, in the above formula, ce is the position offset, $\theta_j$ is the position of border j and $e_{\theta,j}$ is the position value 84 for border j, here given as the position error $e_{\theta,j}$. Thus, intermittently, such as at a frequency corresponding to a certain number of revolutions made by rotor 12, or a frequency corresponding to an update each time a certain time duration has been passed, updater 88 updates the position values 84 using above equation with determining the position offset value ce as described in the following:

In particular, ce shall serve to guarantee that the sum of position values $e_{\theta,j}$ is equal to 0, i.e.,

$$\sum_{j=0}^{N-1} e_{\theta,j} = 0$$

This assumption makes sense because we expect that all errors in position amount to 0. This means there is no physical phase advancing to favor the operation of one specific direction. Based on the last two equations, we get the formula used by updater 88 to compute $c_\theta$, namely by

$$c_\theta = \frac{\sum_{j=0}^{N-1}\sum_{k=0}^{j}\left(\bar{e}_{L,k}-c_{e_L}\right)}{N} = \frac{\sum_{j=0}^{N-1} ps_j}{N} \text{ mit } ps_j = \sum_{k=0}^{j}\left(\bar{e}_{L,k} - c_{e_L}\right)$$

As said, updater 88 may perform its updates less frequently than updater 60 performing the update of the length values 66. It might also be - additionally or alternatively - that the updater 88 uses the acceleration of estimator 70 to determine the times at which an update of the values 84 shall take place, such as only when the acceleration during building the values 66 by updater being below a certain maximum parameter. This may avoid performing the cumbersome task of updating the values 84 based on states of the storage 58 where the values 66 are of less reliable characteristic.

Finally, performer 60 may use the position values 84 as determined/updated in order to more precisely create the computation signal 22 indicating computation points during the rotation of rotor 12. For instance, performer 60 detects the times which rotor 12 passes by a certain border j, detectable by use of the pattern change in the signals of sensors $30_1$ to $30_3$. Using the corresponding position value $e_{\theta,j}$, performer 60 is able to precisely associate the time instance with a precise position and by additionally using the velocity as indicated by signal 90, performer 60 is capable of computing a remaining time to reach a certain commutation or stator field adjustment point which might, for instance, be located in rotation direction in the sector following border j. As an outcome thereof, motor 10 may be controlled very efficiently at lower noise.

Thus, in other words, and using other words, above embodiments achieve a sector length error identification for velocity measurement to enable a length error compensation in velocity measurement and, optionally, an edge/border location error identification for commutation with edge/border location error compensation in commutation. For sector length error identification for velocity measurement, the duration of each sector in one mechanical revolution is measured with a timer. A ring buffer may be used for storage of these measured values. The duration of a whole mechanical revolution is measured with the sum of the ring buffer and updated incrementally at each sector edge or border. The acceleration is estimated by differentiating the motor speed calculated from mechanical revolution period. By assuming the motor speed being quasi-constant within one mechanical revolution, the true length of a sector can be estimated by dividing the sector duration by the mechanical revolution period. The estimated sector length is then used to update the sector length error look-up table (LUT). A low pass filter may be used to this end, which can also be understood as an observer. The length or size of the LUT is the number of sectors within one mechanical revolution, or 6 * number of pole pairs. As the quasi-constant speed assumption is more reliable at higher motor speed, the lowpass filter cutoff frequency (observer gain) may be designed to increase with speed to put more weight on measurements with higher speed. Also, high acceleration is harmful for the quasi-constant speed assumption. To fight against it, the observer may punish the measurements with high acceleration, by lowering their weight in LUT update. Due to the incremental design of the algorithm, an offset correction may be used to keep the sum of sector length error LUT zero. The online identified sector length error LUT may be used for improving precision and accuracy of the velocity measurement which is obtained by dividing the last sector length by the time between the last two Hall sensor events. In addition, the expected arriving time of the next Hall sensor event may be also adjusted using the LUT. If the next Hall sensor event does not occur within the expected arriving time, the velocity measurement algorithm interprets the missing Hall sensor event as a deceleration and reduces the measured velocity accordingly until the Hall sensor event finally occurs. Therefore, adjusting the expected arriving time of the next Hall sensor event using the LUT improves the precision and accuracy of the velocity measurement during deceleration. Thus, measurement performer may determine a current speed of the rotor by subjecting a recent time duration relating to a recently traversed sector and the length of the recently traversed sector as determined by the stored length value 66 for the recently traversed sector to a division, and/or correct the current speed of the rotor in phases of rotor deceleration during a traversal of a currently traversed sector by determining an expected arriving time for a trailing border of the currently traversed sector based on the length of the currently traversed sector as determined by the stored length value 66 for the currently traversed sector and a current speed value determined by subjecting a recent time duration relating to a previously traversed sector and the length of the previously traversed sector as determined by the stored length value 66 for the previously traversed sector to a division and correcting, after expected arriving time and while not having reached the trailing border, the current speed value so as to account for a time delay to reach the trailing border, caused by the rotor deceleration. According to some embodiments, the commutation quality is improved, or precisely speaking the accuracy and precision of the electrical angle. For this purpose, another LUT, called edge location error LUT, may be managed. The Hall edge location error LUT is generated from the sector length error LUT. The edge location error LUT might be generated at a lower frequency than compared to the update of the sector length error LUT. The edge location is the accumulation of sector lengths. Therefore, the edge location error LUT is generated by accumulating the sector length error LUT. To solve the unknown offset when accumulating the relative position to the absolute, the sum of edge location error LUT is restricted to 0, assuming there is no physical phase advancing of the Hall sensors to favor the operation in one specific direction. To reject the negative impact of high acceleration/deceleration on the LUT, the edge location error LUT may be updated only when the relative speed change within one mechanical revolution is smaller than a given threshold. Finally, the generated edge location error LUT may be used for improving the commutation quality, by adjusting the starting and finishing angles of the expected electrical angle until the next Hall sensor event by extrapolation based on the last velocity measurement to achieve smooth commutation with "field-oriented control". That is, the measurement performer 60 may use the stored position values 84 and a current speed as determined based on a recent time duration relating to a recently traversed sector and the length of the recently traversed sector as determined by the stored length value 66 for the recently traversed sector so as to control the commutation of the electric motor 10 while the rotor traverses a subsequent sector, following the recently traversed sector in a rotor rotation direction, such as to schedule commutation times or set one or more commutation phase angle(s). Thus, the algorithm described above is able to calibrate a sensor part of a motor 10, which improves the accuracy and precision of velocity measurement and commutation quality. This helps the motor to generate less acoustic noise and losses, bringing better experience to the users.

The proposed online calibration does not require any specific motion or operation mode for calibration. It runs silently in the background in all operation modes. The LUTs may converge within a few seconds during the first operation after a power cycle. Once the LUTs converge, the error compensation can be conducted for all motor speeds. It is worth mentioning that the update of the LUT may be active only at speeds which are high enough. It might also only be active when the rotor speed is below some very high speed. If in the application the motor never or only very shortly runs within the abovementioned speed range, it does not benefit from the online sensor calibration. What can be done is intentionally running the motor at a constant speed within the intended speed interval for a few seconds after a power cycle. Once Hall placement error LUT has converged, it may improve the velocity measurement accuracy and the commutation quality regardless of speed. The speed range for LUT update is wide. The uncertainty at relatively low speed is handled by automatically lowering the weighting factor. Unlike low pass or moving average filtering, the methods described above do not increase the phase lag, which helps keeping the control stability. Favorably, the proposed method is applicable for both single- and multi-pole pair motors. Further, the online sensor calibration has no tunable parameters. Since the error LUT is initialized and regenerated after each controller power cycle, there is also no need to back up the LUTs for different motors. The generation of the edge location error LUT relies on the sector length error LUT, but not the other way around. Thus, one could skip the edge location error LUT generation and improve only the velocity measurement.

Note that apparatus 50 may form a system along with, on the one hand, the motor 10 comprising stator 14 and rotor 12 and the arrangement of sensors 30, as well as, on the other hand, an object or item driven by the motor 10, such as via a gear connected to the rotor 12 via a shaft of the motor. For instance, the object might be an arm or a leg in case of the system being a robot. Other possibilities exist as well. Further, the motor 10 itself may comprise apparatus 50.

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus.

Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

In the foregoing Detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

The above described embodiments are merely illustrative for the principles of the present disclosure. It is understood that modifications and variations of the arrangements and the details described herein will be apparent to others skilled in the art. It is the intent, therefore, to be limited only by the scope of the pending patent claims and not by the specific details presented by way of description and explanation of the embodiments herein.

List of reference numerals

| | |
|---|---|
| 10 | electric motor |
| 12 | rotor |
| 14 | stator |
| 14a to 14f | electromagnets |
| 16 | axis |
| 18 | current controller |
| 20 | poles |
| 22 | commutation signal |
| $30_1$, $30_2$, $30_3$ | magnetic field sensors |
| 32 | sectors |
| 34 | time duration measurer |
| 36 | borders |
| 38 | sequence |
| 50 | apparatus for rotation measurement |
| 52 | input |
| 54 | revolution time duration determiner |
| 56 | length values updater |
| 58 | length value storage or look-up table |
| 60 | rotation measurement performer |
| 62 | stored length value |
| 64 | output signal |
| 66 | sector index |
| 70 | acceleration estimator |
| 72 | offset length value |
| 80 | storage |
| 82 | sector index |
| 84 | stored position value |
| 86 | offset position value |
| 88 | position values updater |

**Claims**

1.  Apparatus (50) for rotation measurement of a rotor (12) of an electric motor (10) comprising magnetic field sensors ($30_{1..3}$) statically arranged in proximity to the rotor (12) for measuring magnetic fields generated by magnetic poles (20) of the rotor (12) so that sensor signals of the magnetic field sensors ($30_{1..3}$) change at borders (36) between sectors (32) into which a full revolution of the rotor (12) is partitioned, the apparatus configured to

    receive a sequence (38) of time durations between consecutive changes of the magnetic field sensors' output signals,
    determine a current average revolution time duration of the rotor (12) based on a sum of M recent time durations of the sequence (38) of time durations, wherein M≥N and N is the number of sectors (32),
    store, for each sector (32), a stored length value (62) which indicates the length of the respective sector (32) or a deviation of the length of the respective sector (32) from an ideal sector length of the sectors (32), and update, based on the current average revolution time duration of the rotor (12) and a current time duration of the sequence (38) of time durations, the stored length value (62) for a current sector to which the current time duration relates, and
    use the stored length values (62) of the sectors (32) for performing a measurement of a rotation of the rotor (12).

2.  Apparatus according to claim 1, wherein
    determine the current average revolution time duration of the rotor (12) based on a sum of M most recent time durations of the sequence (38) of time durations, with M being an integer multiple of N.

3. Apparatus according to claim 1 or 2, wherein
the electric motor (10) is a multi-pole-pair motor, the rotor (12) comprises pp>1 pole pairs, a number of the magnetic field sensors ($30_{1...3}$) is three and N = pp*6.

4. Apparatus according to any of claims 1 to 3, configured to
store, in addition to the stored length value (62) for each sector (32), an offset length value (72) for offsetting the stored length values (62) of the sectors (32) so that a sum of the stored length values (62) of all sectors (32), offset using the offset length value (72), exactly corresponds to one revolution, and update, based on the current average rotational revolution time duration of the rotor (12) and the current time duration of the sequence (38) of time durations, the stored length value (62) for the current sector (32) using an updated length value and update the offset length value (72) using the updated length value for the current sector (32) to obtain an updated offset length value so that a sum of the stored length values (62) for all sectors (32) other than the current sector and the updated length value for the current sector, offset using the updated offset length value, exactly corresponds to one complete revolution.

5. Apparatus according to any of claims 1 to 4, configured to

perform the updating, based on the current average revolution time duration of the rotor (12) and the current time duration of the sequence (38) of time durations, the stored length value (62) for the current sector by determining a currently measured length value for the current sector based on the current average revolution time duration of the rotor (12) and the current time duration of the sequence (38) of time durations, change the stored length value (62) for the current sector towards the currently measured length value for the current sector by an amount, which is - within a predetermined rotor speed interval -

the higher the higher a current speed of the rotor (12) is, and/or
the lower the higher a current acceleration of the rotor (12) is.

6. Apparatus according to any of claims 1 to 4, configured to

perform the updating, based on the current average revolution time duration of the rotor (12) and the current time duration of the sequence (38) of time durations, of the stored length value (62) for the current sector by

determining a currently measured length value for the current sector based on the current average revolution time duration of the rotor (12) and the current time duration of the sequence (38) of time durations, change the stored length value (62) for the current sector towards the currently measured length value for the current sector by

determining a weight (1 - λ) between 0 and 1 so as to be - within a predetermined rotor speed interval -

the higher the higher a current speed of the rotor (12) is, and/or
the lower the higher a current acceleration of the rotor (12) is,

replacing the stored length value (62) for the current sector by an updated length value corresponding to a sum of the stored length value (62) for the current sector times λ and the currently measured length value for the current sector times (1 - λ).

7. Apparatus according to claim 5 or 6, configured to determine the weight or the amount so as to

strictly monotonically change between an upper and a lower bound according to an inverse of a current speed of the rotor (12), and/or
strictly monotonically change between an upper and a lower bound according to a current acceleration of the rotor (12), and/or
leave the stored length value (62) unchanged if the current speed of the rotor (12) is below a predetermined limit.

8. Apparatus according to any of claims 5 to 7, configured to use the current average revolution time duration of the rotor (12) as an estimate for the inverse of the current speed of the rotor (12) and/or estimate the current acceleration of the rotor (12) based on the current average revolution time duration of the rotor (12) and a previously obtained average revolution time duration of the rotor (12) determined based on a sum of earlier M time durations of the sequence (38) of time durations, overlapping 0<(M-K)<M trailing time durations of the M time durations, divided by a time corresponding to K most recent time duration(s) of the M time durations.

9. Apparatus according to any of claims 1 to 4, configured to

perform the updating, based on the current average revolution time duration of the rotor (12) and the current time duration of the sequence (38) of time durations, the stored length value (62) for the current sector by

determining a currently measured length value for the current sector based on the current average revolution time duration of the rotor (12) and the current time duration of the sequence (38) of time durations, changing the stored length value (62) for the current sector (32) to become

$\lambda$ times the stored length value (62) for the current sector plus (1 - $\lambda$) times the currently measured length value for the current sector, and

determining $\lambda$ so as to change between a lower and an upper limit according to a product of a first factor, a second factor and the current average revolution time duration of the rotor (12), wherein the first factor corresponds to the difference between the lower and upper bounds divided by a maximum revolution time duration of the rotor (12), and determining the second factor so as to monotonically increase depending on the acceleration of the rotor (12).

10. Apparatus according to any of claims 1 to 9, configured to store, for each of the borders (36) between the sectors (32), a stored position value (84) which indicates a position of the respective border (36) or a positional offset of the respective border (36) from an equidistributed arrangement of the borders (36), and intermittently update, based on the stored length value (62) for the sectors (32), the stored position values (84) of the borders (36).

11. Apparatus according to claim 10, configured to

store, in addition to the stored length value (62) for each sector (32), an offset length value (72) for offsetting the stored length values (62) of the sectors (32) so that a sum of the stored length values (62) of all sectors (32), offset using the offset length value (72), exactly corresponds to one revolution, and update, based on the current average rotational revolution time duration of the rotor (12) and the current time duration, the stored length value (62) for the current sector using an updated length value and update the offset length value (72) using the updated length value for the current sector (32) to obtain an updated offset length value so that a sum of the stored length values (62) for all sectors (32) other than the current sector and the updated length value for the current sector, offset using the updated offset length value, exactly corresponds to one complete revolution, and in the intermittently updating, based on the stored length value (62) for the sectors (32), the stored position values (84) of the borders (36),

determine 1/N times a sum over N partial sums $ps_i$, each partial sum summing up, offset by the offset length value (72), all stored length values (62) from a - in a sector sequence rotationally defined among the sectors - first sector to the - in the sector sequence - $i^{th}$ sector, with i = 1... N, to determine an offset position value (86), and determine, for each sector i, a new position value for a border forming the clockwise or counterclockwise end of sector i, based on the partial sum $ps_i$, offset by the offset length value (72).

12. Apparatus according to claim 10 or 11, configured to

use the stored position values (84) for a commutation of the electric motor (10) and/or use the stored position values (84) and a current speed as determined based on a recent time duration relating to a recently traversed sector and the length of the recently traversed sector as determined by the stored length value (62) for the recently traversed sector so as to control the commutation of the electric motor (10) while the rotor (12) traverses a subsequent sector, following the recently traversed sector in a rotor (12) rotation direction.

13. Apparatus according any of claims 1 to 12, configured to

use the stored length values (62) of the sectors (32) for performing a measurement of a rotational speed of the rotor (12); and/or

determine a current speed of the rotor (12) by subjecting a recent time duration relating to a recently traversed sector and the length of the recently traversed sector as determined by the stored length value (62) for the recently traversed sector to a division, and/or

correct the current speed of the rotor (12) in phases of rotor deceleration during a traversal of a currently traversed sector by determining an expected arriving time for a trailing border of the currently traversed sector based on the length of the currently traversed sector as determined by the stored length value (62) for the currently traversed sector and a current speed value determined by subjecting a recent time duration relating to a previously traversed sector and the length of the previously traversed sector as determined by the stored length value (66) for the previously traversed sector to a division and correcting, after expected arriving time and while not having reached the trailing border, the current speed value so as to account for a time delay to reach the trailing border, caused by the rotor deceleration.

14. Apparatus according any of claims 1 to 13, configured to store the stored length values (62) in a volatile memory.

15. System comprising the apparatus of any of claims 1 to 14, the electric motor (10) and an object motorized by the electric motor (10).

Fig. 1

Fig. 2

Fig. 3

Fig. 4

Fig. 5A

EP 4 764 421 A1

EP 4 764 421 A1

Fig. 5B

Fig. 6A

EP 4 764 421 A1

Fig. 6B

Fig. 7

Europäisches
Patentamt

European
Patent Office

Office européen
des brevets

# EUROPEAN SEARCH REPORT

**Application Number**

EP 24 22 1986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2016/327409 A1 (BOUALLAGA KAMEL [GB] ET AL) 10 November 2016 (2016-11-10)<br>* paragraph [0016] *<br>* paragraph [0011] - paragraph [0013]; figure 6 *<br>* paragraph [0046]; figure 5 *<br>* paragraph [0060] - paragraph [0067]; figure 9B *<br>----- | 1-3,10,<br>12-15<br>4-9,11 | INV.<br>G01D5/244<br>G01D18/00 |
| X | JP 2007 259558 A (ASMO CO LTD) 4 October 2007 (2007-10-04)<br>* paragraph [0007] *<br>* paragraph [0057] - paragraph [0059]; figures 4, 8 *<br>* paragraphs [0063], [0073] *<br>* paragraphs [0033] - [0036], [0041]; figures 1, 3 *<br>* paragraph [0037] - paragraph [0039]; figure 2 *<br>----- | 1-3,12,<br>14,15 | |
| X | JP 2018 146523 A (ALPINE ELECTRONICS INC) 20 September 2018 (2018-09-20)<br>* paragraphs [0007], [0012] *<br>* paragraphs [0016], [0017], [0019], [0020]; figures 2A, 3 *<br>* paragraph [0021]; figure 4 *<br>* paragraphs [0030], [0032] - [0035] *<br>----- | 1-3,10,<br>14,15 | **TECHNICAL FIELDS SEARCHED (IPC)**<br><br>G01D<br>G01P<br>H02P |

The present search report has been drawn up for all claims

| Place of search | Date of completion of the search | Examiner |
|---|---|---|
| Munich | 28 May 2025 | Jakob, Clemens |

EPO FORM 1503 03.82 (P04C01)

## ANNEX TO THE EUROPEAN SEARCH REPORT
## ON EUROPEAN PATENT APPLICATION NO.

EP 24 22 1986

28-05-2025

| Patent document cited in search report | Publication date | Patent family member(s) | | Publication date |
|---|---|---|---|---|
| US 2016327409 A1 | 10-11-2016 | CN | 106464177 A | 22-02-2017 |
| | | EP | 3087665 A1 | 02-11-2016 |
| | | GB | 2521662 A | 01-07-2015 |
| | | JP | 2017501674 A | 12-01-2017 |
| | | KR | 20160103087 A | 31-08-2016 |
| | | US | 2016327409 A1 | 10-11-2016 |
| | | WO | 2015097442 A1 | 02-07-2015 |
| JP 2007259558 A | 04-10-2007 | JP | 4724024 B2 | 13-07-2011 |
| | | JP | 2007259558 A | 04-10-2007 |
| JP 2018146523 A | 20-09-2018 | JP | 6841690 B2 | 10-03-2021 |
| | | JP | 2018146523 A | 20-09-2018 |

EPO FORM P0459

For more details about this annex : see Official Journal of the European Patent Office, No. 12/82